# EUROPÄISCHE PATENTANMELDUNG

(11) **EP 3 813 351 A1**
(43) Veröffentlichungstag der Anmeldung: **28.04.2021**
(21) Anmeldenummer: 20202821.3
(22) Anmeldetag: 20.10.2020
(51) Int. Cl.: H04N 5/225, G03B 9/00

(54) **STREULICHTBLENDE FÜR EIN KINEMATOGRAFISCHES KAMERASYSTEM**

(30) Priorität: 23.10.2019 DE 102019128573
(71) Anmelder: Arnold & Richter Cine Technik GmbH & Co. Betriebs KG, 80807 München (DE)
(72) Erfinder: KASTER, Jan, 82340 Feldafing (DE)
(74) Vertreter: Maikowski & Ninnemann Patentanwälte Partnerschaft mbB

(57) **Zusammenfassung**

Vorgeschlagen wird eine Streulichtblende (50) für eine Kameraeinheit (10) eines Kamerasystems (100) zum Erfassen von Steh- und/oder Bewegtbildern eines Objekts. Die Kameraeinheit enthält einen Bildsensor (20) und ein Objektivmount (30), welche entlang einer optischen Achse (A) des Kamerasystems (100) angeordnet sind. Das Objektivmount (30) führt mittels eines Objektivs einen bildgebenden Lichtstrahl (L) aus der das Objekt umfassenden Umgebung einer Sensoroberfläche (21) des Bildsensors (20) zu. Die Streulichtblende (50) ist ausgebildet für eine Anordnung, bezogen auf die optische Achse (A), am Objektivmount (30) oder zwischen dem Objektivmount (30) und dem Bildsensor (20). Die Streulichtblende (50) weist eine Rahmenstruktur (51) mit einer Anzahl Rahmenstrukturabschnitte (511-515) sowie eine Blendenöffnung (500) für den bildgebenden Lichtstrahl (L) auf, wobei die Blendenöffnung (500) durch einen der Anzahl Rahmenstrukturabschnitte (511) ausgebildet ist. Ein Umfangsverlauf (55) der durch den Rahmenstrukturabschnitt (511) ausgebildeten Blendenöffnung (500) ist ein geschlossener Polygonzug, der eine Mehrzahl senkrecht zur optischen Achse (A) verlaufende Polygonsegmente mit jeweils mindestens drei Kanten (551) beinhaltet.

## Beschreibung

### TECHNISCHES GEBIET

Die vorliegende Erfindung betrifft Ausführungsformen einer Streulichtblende für ein Kamerasystem, insbesondere ein kinematografisches Kamerasystem. Die vorliegende Erfindung betrifft weiter Ausführungsformen eines Kamerasystems mit einer Streulichtblende, insbesondere Ausführungsformen eines kinematografischen Kamerasystems mit einer Streulichtblende.

### HINTERGRUND

Aus der Druckschrift WO 2006/012859 A2 ist beispielsweise ein kinematografisches Kamerasystem bekannt.

Ein derartiges Kamerasystem umfasst eine Kameraeinheit zum Erfassen von Steh- und/oder Bewegtbildern eines Objekts, wobei die Kameraeinheit eine Optik mit wenigstens einem Objektiv sowie einem Bildsensor aufweist. Über das Objektiv wird das Licht eingefangen und dem Bildsensor zugeführt. Der Bildsensor ist mit einer Bildsignalauswerteeinheit verbunden, welche den Bildsensor ausliest und im Ergebnis digitale Daten produziert, die indikativ für die Steh- bzw. Bewegtbilder sind.

Üblicherweise ist ein Kamerasystem bzw. das Optiksystem des Kamerasystems auch mit einer oder mehreren Blenden ausgestattet.

Beispielsweise mindert eine Streulichtblende Streulicht in einem Detektionsbereich, also einem Bereich vor dem Bildsensor.

Eine Feldblende begrenzt einen bildgebenden Lichtstrahl auf einen gewünschten Detektionsbereich, wobei auch Streulichtblenden als Feldblenden ausgebildet sein können.

Eine sogenannte Aperturblende definiert beispielsweise die numerische Apertur (NA) und/oder eine T/# (für Objektive zur Aufnahme von Bewegtbildern hat sich die Verwendung eines sog. T-Stop oder einer T/# etabliert. Diese ist - wie die F/# - ein Maß für die Bild-NA, zusätzlich allerdings auch für die spektrale Transmittanz. Damit wird die Zahl aussagekräftiger für die tatsächliche Belichtung des Sensors). Die Aperturblende befindet sich zum Beispiel im Objektiv an der Stelle, wo Hauptstrahlen die optische Achse schneiden.

Unter dem Begriff "bildgebendem Lichtstrahl" wird vorliegend (wie üblich) die gesamte räumliche Feldverteilung bezeichnet, welche zu einem Bild konvergiert.

Eine der vorliegenden Erfindung zugrundeliegende Aufgabe ist es, eine hinsichtlich der Bildgebung Vorteile bewirkende Streulichtblende für ein Kamerasystem vorzuschlagen.

### BESCHREIBUNG

Hiervon ausgehend werden die Gegenstände der unabhängigen Ansprüche vorgeschlagen. Merkmale einiger Ausführungsbeispiele sind in den Unteransprüchen angegeben. Die Merkmale der Unteransprüche können miteinander zur Ausbildung weiterer Ausführungsformen kombiniert werden, sofern nicht ausdrücklich etwas anderes angegeben ist.

Gemäß einem ersten Aspekt wird eine Streulichtblende für eine Kameraeinheit eines Kamerasystems zum Erfassen von Steh- und/oder Bewegtbildern eines Objekts vorgeschlagen. Die Kameraeinheit enthält einen Bildsensor und ein Objektivmount, welche entlang einer optischen Achse des Kamerasystems angeordnet sind. Das Objektivmount führt mittels eines Objektivs einen bildgebenden Lichtstrahl aus der das Objekt umfassenden Umgebung einer Sensoroberfläche des Bildsensors zu. Die Streulichtblende ist ausgebildet für eine Anordnung, bezogen auf die optische Achse, am Objektivmount oder zwischen dem Objektivmount und dem Bildsensor. Die Streulichtblende weist eine Rahmenstruktur mit einer Anzahl Rahmenstrukturabschnitte sowie eine Blendenöffnung für den bildgebenden Lichtstrahl auf, wobei die Blendenöffnung durch einen der Anzahl Rahmenstrukturabschnitte ausgebildet ist. Ein Umfangsverlauf der durch den Rahmenstrukturabschnitt ausgebildeten Blendenöffnung ist ein geschlossener Polygonzug, der eine Mehrzahl senkrecht zur optischen Achse verlaufende Polygonsegmente mit jeweils mindestens drei Kanten beinhaltet.

Einen zweiten Aspekt bildet ein Kamerasystem mit einer Kameraeinheit, die mit einer Streulichtblende des ersten Aspektes ausgestattet ist.

Nachstehend wird auf beide vorstehend genannten Aspekte Bezug genommen werden.

Aufgrund der geradlinig verlaufenden Kanten des Polygonzugs fokussiert die Streulichtblende wenig bis kein Streulicht, weder direkt noch durch Mehrfachreflektionen, und vergrößert daher nicht die Bestrahlungsstärke von Streulicht im Bild.

Weitere Merkmale und Vorteile werden dem Fachmann in Anbetracht des Studiums der nachfolgenden detaillierten Beschreibung sowie des Sichtens der begleitenden Zeichnungen deutlich.

### KURZE BESCHREIBUNG DER ZEICHNUNGEN

Die in den Zeichnungen gezeigten Teile sind nicht notwendigerweise maßstabsgetreu; vielmehr liegt die Betonung in dem Darstellen von Prinzipien der Erfindung. Ferner bezeichnen in den Zeichnungen gleich Bezugszeichen einander entsprechende Teile. In den Zeichnungen zeigen:
- Fig. 1: schematisch und exemplarisch ein Kamerasystem gemäß einer oder mehreren Ausführungsformen;
- Fig. 2: schematisch und exemplarisch einen Ansatz zur Ausbildung des Umfangsverlauf einer Blendenöffnung einer Streulichtblende gemäß einer oder mehreren Ausführungsformen; und
- Fig. 3: schematisch und exemplarisch eine Aufsicht und eine perspektivische Ansichten einer Streulichtblende gemäß einer oder mehreren Ausführungsformen,
- Fig. 4: schematisch und exemplarisch eine perspektivische Ansicht einer Streulichtblende gemäß einer oder mehreren Ausführungsformen, die an einem Objektivmount eines Kamerasystems installiert ist; und
- Fig. 5: schematisch und exemplarisch eine Aufsicht einer Streulichtblende gemäß einer oder mehreren Ausführungsformen.

### DETAILLIERTE BESCHREIBUNG

In der folgenden detaillierten Beschreibung wird auf die begleitenden Zeichnungen Bezug genommen, in denen durch die Veranschaulichung spezifischer Ausführungsformen gezeigt wird, wie die Erfindung in die Praxis umgesetzt werden kann.

Bezug wird nunmehr im Detail auf verschiedene Ausführungsformen und auf ein oder mehrere Beispiele, die in den Figuren veranschaulicht sind, genommen. Jedes Beispiel wird in erläuternder Art und Weise präsentiert und ist nicht als eine Einschränkung der Erfindung zu deuten. Beispielsweise können veranschaulichte oder als Teil einer Ausführungsform beschriebene Merkmale auf oder im Zusammenhang mit anderen Ausführungsformen angewandt werden, um noch eine weitere Ausführungsform hervorzubringen. Dass die vorliegende Erfindung derartige Modifizierungen und Variationen umfasst, ist beabsichtigt. Die Beispiele werden unter Anwendung einer spezifischen Sprache beschrieben, die nicht als den Schutzumfang der angefügten Ansprüche einschränkend ausgelegt werden sollte. Die Zeichnungen sind keine maßstabgetreue Wiedergabe und dienen lediglich der Veranschaulichung. Zum besseren Verständnis sind, wenn nicht anders angegeben, dieselben Elemente durch dieselben Referenzen in den verschiedenen Zeichnungen gekennzeichnet worden.

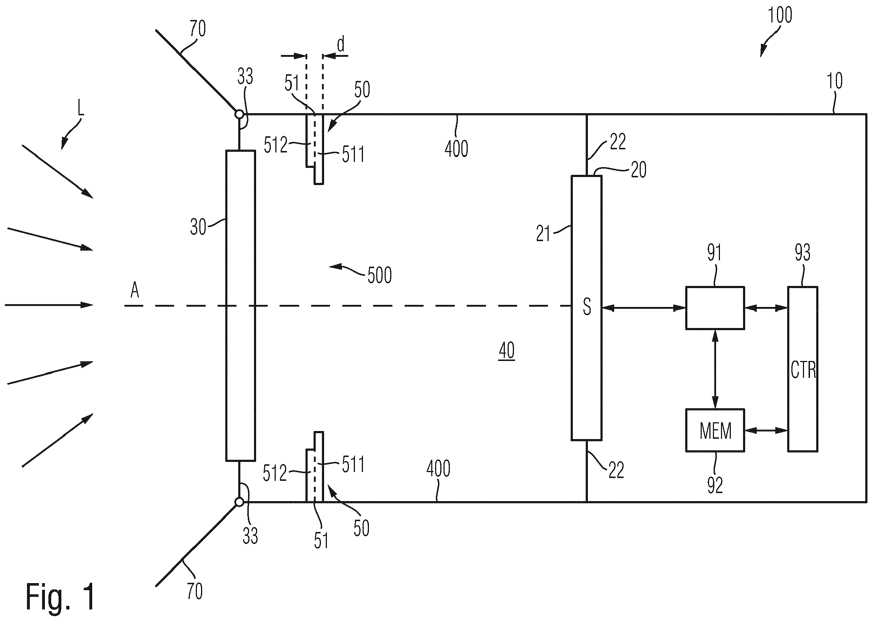

Die Fig. 1 zeigt schematisch und exemplarisch eine Ausführungsform eines Kamerasystems 100.

Das hier beschriebene Kamerasystem 100 ist beispielsweise ausgebildet, im Rahmen der Kinematographie verwendet zu werden, also beispielsweise zur Aufnahme eines Dokumentarfilms, eines Spielfilms, einer Show, sonstiger Studiodarbietungen und dergleichen. Das Kamerasystem 100 kann ein kinematographisches Kamerasystem 100 sein. Alternativ oder zusätzlich zu der Aufnahme von Bewegtbilder ist die das Kamerasystem 100 gemäß einer Ausführungsform dazu ausgebildet, Stehbilder aufzunehmen.

Allerdings ist die vorliegende Erfindung nicht auf kinematographische Kamerasysteme beschränkt.

Bei dem Kamerasystem 100 kann es sich zum Beispiel alternativ um ein medizintechnisches Kamerasystem handeln, beispielsweise zur Erzeugung von medizintechnischen Bildaufnahmen.

Grundsätzlich kommen sämtliche Kamerasysteme, insbesondere Kameraoptiksysteme, in Betracht, die mit einer hier im Detail beschriebenen Streulichtblende (s. Bezugsziffer 50) ausgestattet werden können. Dazu zählen beispielsweise Kamerasysteme für die Fotografie, als auch Kamerasysteme für die Mikroskopie.

Eine Kameraeinheit 10 des Kamerasystems 100 umfasst beispielsweise die üblichen Komponenten einer Kamera, die in den Zeichnungen nicht näher bzw. nur schematisch dargestellt sind.

Zu den Komponenten des Kamerasystems 100 gehören beispielsweise eine Kamera-Optik mit wenigstens einem Objektivmount 30 (an das ein Objektiv angebracht werden kann), ein Kompendium 70, wenigstens ein Bildsensor 20 der Kameraeinheit 10, digitale Signalverarbeitungsmittel, z.B. umfassend eine Ausleseeinheit 91, die den Bildsensor 20 ausliest und entsprechende Daten einem digitalen Speicher 92 zuführt, sowie einen Controller 93, der die Ausleseeinheit 91 und/oder den Speicher 92 steuert, eine Benutzerschnittstelle, Kommunikationsschnittstellen (nicht dargestellt) usw.

Auf die Einzelheiten beispielhafter Ausbildungen der dem Bildsensor 20 nachgelagerten Komponenten 91, 92, 93 soll hier nicht näher eingegangen werden, denn deren grundsätzliche Funktionsweisen sind dem Fachmann bekannt.

Die Kameraeinheit 10 kann ausgebildet sein, im Rahmen der Kinematographie verwendet zu werden, also beispielsweise zur Aufnahme eines Stehbilds oder von Bewegtbildern, z.B. eines Dokumentarfilms, eines Spielfilms, einer Show, sonstiger Studiodarbietungen und dergleichen. Die Kameraeinheit 10 kann eine kinematographische Kameraeinheit 10 sein. Bei einer anderen Ausführungsform ist die Kameraeinheit 10 für medizintechnische Zwecke ausgebildet, beispielsweise zur Erzeugung von Bildern oder Bildsequenzen eines Objekts (z.B. ein Stück Gewebe) oder dergleichen. Wir bereits oben beschrieben, kommen grundsätzlich sämtliche Kamerasysteme in Betracht, um mit der hier beschriebenen Streulichtblende 50 ausgestattet zu werden. Dazu zählen, wie gesagt, beispielsweise Kamerasysteme für die Fotografie, als auch Kamerasysteme für die Mikroskopie.

Das Kamerasystem 100 kann ein digitales Kamerasystem sein, bei dem die Bilddaten mithilfe eines digitalen Bildsensors 20 erzeugt werden. Es liegt aber auch im Rahmen der Erfindung, dass der Bildsensor 20 in Gestalt eines heute noch gelegentlich verwendeten analogen Films vorliegt. Beim derart ausgebildeten Kamerasystem erfolgt die Aufnahme der Bilder also in analoger Weise.

Typischerweise aber ist der Bildsensor 20 als digitaler Bildsensor ausgebildet, beispielsweise als ein Halbleiterchip mit einer Vielzahl von Pixeln, wie ein CMOS oder CCD Bildsensor. Ein solcher Bildsensor 20 weist typischerweise eine im Wesentlichen rechteckförmige Sensoroberfläche 21 auf.

Das Kamerasystem 100 umfasst einen Bildraum 40 (der sich auch als Objektivraum bezeichnen ließe), in den ein am Objektivmount 30 befestigtes Objektiv (nicht dargestellt) einen bildgebenden Lichtstrahl L aus der das Objekt umfassenden Umgebung einkoppelt und dem Bildsensor 20 zuführt, wobei zwischen dem Objektivmount 30 und dem Bildsensor 20 weitere (neben den hier nicht gezeigten) optische Komponenten wie ein oder mehrere Filter, eine oder mehrere Linsen, eine oder mehrere Blenden und dergleichen vorgesehen sein können.

Es versteht sich, dass an die Kameraeinheit 10 verschiedene Objektive am Objektivmount 30 angebracht werden können. Die Komponenten Kompendium 70, Objektivmount 30 (sowie Objektiv), sowie Kameraeinheit 10 können also als separate Komponenten hergestellt sein. Z.B. können an das Objektivmount 30 auch unterschiedlich ausgebildete Kompendien 70 gekoppelt werden, sowie unterschiedlich ausgebildete Objektive 30, und an dasselbe Objektivmount 30 können z.B. unterschiedliche Kameraeinheiten 10 gekoppelt werden. Das Kamerasystem 100 kann also modular aufgebaut sein.

Zur Kopplung des Objektivs an die Kameraeinheit 10 ist das Objektivmount 30 vorgesehen, welches ebenfalls einen Bestandteil des Kamerasystems 100 ausmachen kann. Das Objektivmount 30 ist ausgebildet, eine mechanische Schnittstelle zwischen dem Objektiv und der Kameraeinheit 10 auszubilden. Objektive verschiedener Hersteller haben oft verschiedene objektivseitige Mount-Geometrien, weshalb die kameraseitigen Mounts austauschbar oder mit Adaptern modifizierbar sind (im professionellen Kinematografiebereich sowie im Fotobereich werden gelegentlich Zwischenadapter verwendet).

Der Bildsensor 20 der Kameraeinheit 10 hat die in den Bildraum 40 weisende Sensoroberfläche 21. Die Sensoroberfläche 21 kann von einem Sensorrahmen 22 umrahmt sein, wobei der Sensorrahmen 22 ebenfalls den Bildraum 40 begrenzen kann und beispielsweise bündig an eine Innenwand 400 des Bildraums 40 angrenzt, wie dies schematisch in der Fig. 1 dargestellt ist.

Andererseits kann der Bildraum 40 auch von dem Objektivmount 30 (bzw. einem daran befestigten Objektiv) begrenzt sein. Das Objektivmount 30 kann durch einen Objektivrahmen 33 gestützt sein, der ebenfalls den Bildraum 40 begrenzen kann. Im Übrigen wird der Bildraum 40 auch von der Innenwand 400 begrenzt.

An dem Objektivrahmen 33 (oder an anderer Stelle der Kameraeinheit 10 bzw. des Kamerasystems 100) kann das Kompendium 70 (das auch als Matte-Box bezeichnet wird) angekoppelt sein.

In Fig. 1 ist der Bildraum 40 als im Wesentlichen zylinderförmig dargestellt, wobei bei einer anderen Ausführungsform der Bildraum 40 eine sich in oder entgegen der Lichteinfallrichtung verjüngende kegelabschnittsform aufweist. Andere geometrische Ausbildungen des Bildraums 40 sind möglich.

Fig. 1 zeigt eine vereinfachte schematische Darstellung des Kamerasystems 100. Die nähere Ausgestaltung des Kamerasystems 100, soweit sie die Komponenten 70, 30, 20 sowie 91-93 betrifft, ist vorliegend weniger relevant. Die Grundprinzipien dieser Komponenten sind dem Fachmann bekannt, und die vorliegende Erfindung weicht von diesen nicht ab.

Abgesehen von der Einkopplung des Umgebungslichts L durch das Objektiv am Objektivmount 30 kann der Bildraum 40 im Wesentlichen lichtdicht ausgebildet sein.

Das die Kameraeinheit 10 umfassende Kamerasystem 100 zum Erfassen von Steh- und/oder Bewegtbildern beinhaltet folglich insbesondere die folgenden Komponenten, welche entlang der optischen Achse A des Kamerasystems 100 angeordnet sind: der (zum Beispiel digitale) Bildsensor 20 und das Objektivmount 30, welches (mittels eines am Objektivmount 30 befestigten Objektivs) den bildgebenden Lichtstrahl L aus der das Objekt umfassenden Umgebung der Sensoroberfläche 21 des Bildsensors 20 zuführt.

Ferner ist gemäß den hier beschriebenen Ausführungsformen eine Streulichtblende 50 vorgesehen, die ausgebildet ist für eine Anordnung, bezogen auf die optische Achse A, entweder am Objektivmount 30 (z.B. auch im Objektivmount 30) oder zwischen dem Objektivmount 30 und dem Bildsensor 20 (wie schematisch und beispielhaft in Fig. 1 dargestellt). Dabei umfasst die Variante "Anordnung am Objektivmount" auch eine Anordnung in einem oder an einem am Objektivmount 30 zu befestigenden Objektiv.

Einige der weiter unten beschriebenen Ausführungsformen der Streulichtblende 50 gehen von den folgenden Überlegungen aus:

Vorbekannte Streulichtblenden haben im Bereich des Objektivmounts typischerweise kreisrunde Aussparungen in den notwendigen Formatabmessungen an der entsprechenden axialen Position im optischen System. Nahe am Sensor sind die Blenden typischerweise beinahe - angepasst an die Form der Sensoroberfläche - rechteckig, nahe an den Pupillen des Optiksystems sind die Querschnitte der Blenden typischerweise kreisrund.

Die allgemeine Funktion von Streulicht- und Feldblenden ist es, den physikalischen, bildgebenden Lichtstrahl auf den relevanten, sog. "Focal Plane Array" (FPA) Bereich zu begrenzen und die Bestrahlung von Optomechanik, Optoelektronik, etc., zu vermeiden bzw. zu mindern, beispielsweise um den Makrokontrast im Bild zu erhöhen, indem störendes Streulicht (auch als "veiling glare" bekannt) reduziert wird. Werden die Blenden im Querschnitt naheliegender Weise auf die Form des bildgeben Strahls angepasst, so weisen die Streulichtblenden gekrümmte Segmente auf, beispielsweise in Kegelschnittform (kreisrund, elliptisch/ parabolisch, etc.).

Dies hat jedoch den Nachteil, dass an Aperturkanten und deren Flächen reflektiertes Streulicht in den FPA-Bereich fokussiert werden kann. Durch die Fokussierung erhöht sich die Bestrahlungsstärke und damit die relative Sichtbarkeit des Streulichts. Dieser unerwünschte Effekt weist in der Regel eine hohe Lichteinfallwinkelsensitivität auf (flackerndes Streulicht bei Kamerabewegungen) und ist daher ausgeprägt wahrnehmbar und äußerst unerwünscht.

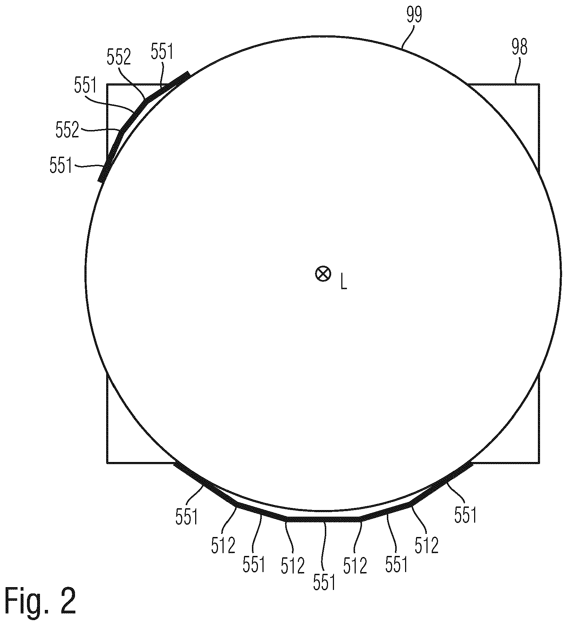

Statt die Streulichtblenden in Form des bildgebenden Strahlquerschnitts 99 oder rechteckförmig entsprechend der Form 98 einer Sensoroberfläche auszuführen, werden gemäß einigen der hier beschriebenen Ausführungsformen Kegelschnittsegmente in Polygonsegmenten mit jeweils mindestens drei Kanten 551 angenähert, die an Ecken 552 des Polygonzugs in einander übergehen, wie in Fig. 2 veranschaulicht.

Dabei ist es zweckmäßig, die Anzahl der Polygonsegmente möglichst gering zu halten, z.B. entsprechend einem system- und positionsspezifischen Kompromiss zwischen azimutaler Feldbegrenzung und Polygonsegmentanzahl. Auf Fasen und Radien wird gemäß einigen Ausführungsformen soweit wie möglich verzichtet, beispielsweise durch Wahl eines entsprechenden Fertigungsverfahren mit geringem Werkzeugdurchmesser, beispielsweise Drahterodieren, Strahlschneiden (z.B. Laser), Ätzen (z.B. mit Säuren oder Ionen- oder Elektronenstrahlen) oder Urformen wie Spritzguss oder additive Verfahren (beispielsweise Lasersintern/-schmelzen, Stereolithografie, etc.). Außenkanten können scharfkantig und gratfrei bleiben.

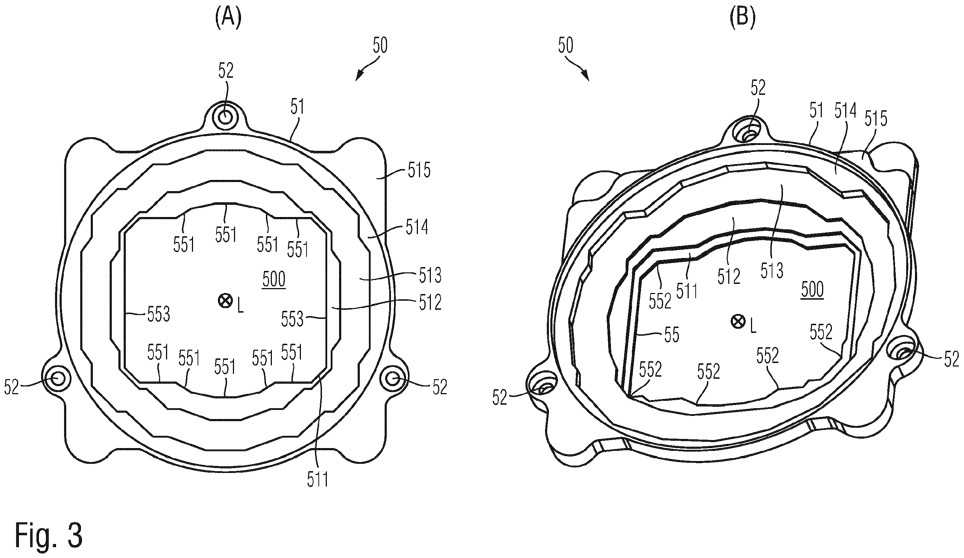

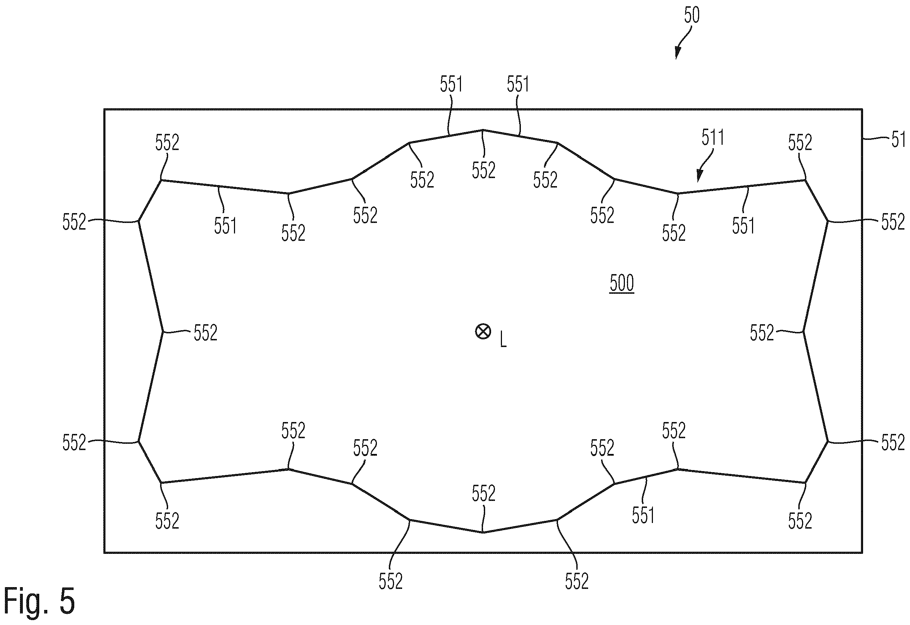

Fig. 3 und 5 veranschaulichen Ausführungsformen der Streulichtblende 50:

Die Streulichtblende 50 weist eine Rahmenstruktur 51 mit einer Anzahl Rahmenstrukturabschnitte 511-515 auf. Gemäß einer Ausführungsform ist nur ein Rahmenstrukturabschnitt 511 vorgesehen (s. Fig. 5). Gemäß einer anderen Ausführungsform sind mehrere Rahmenstrukturabschnitte 511, 512, 513, 514, 515 vorgesehen, z.B. fünf Abschnitte 511-515, wie in Fig. 3 dargestellt. Sofern mehrere Rahmenstrukturabschnitte 511, 512, 513, 514, 515 vorgesehen, können diese in einer mehrlagigen Verbundkonstruktion angeordnet sein, wie es z.B. in der noch nicht veröffentlichten Patentanmeldung DE 10 2019 112 679.7 der hiesigen Anmelderin beschrieben ist, und deren gesamter Offenbarungsgehalt hiermit in die vorliegende Patentanmeldung einbezogen wird. Die Rahmenstrukturabschnitte 511, 512, 513, 514, 515 können folglich jeweils als Lage ausgebildet sein, die sandwichartig angeordnet sind und sich zumindest in einem der nachstehenden Parameter voneinander unterscheiden: Material; Lagendicke; Größe der Öffnung für den bildgebenden Lichtstrahl. Die Rahmenstrukturabschnitte 511, 512, 513, 514, 515 können jeweils aus einer monolithischen Lage ausgebildet sein. Z.B. sind die Rahmenstrukturabschnitte 511, 512, 513, 514, 515 miteinander verklebt, verlötet, verrastet und/oder verschweißt. Ein innerster oder dem Bildsensor 20 am nächsten liegender Rahmenstrukturabschnitt 511 der Rahmenstruktur 51 kann sehr dünn sein, z.B. den dünnsten aller lagenartigen Rahmenstrukturabschnitte 511, 512, 513, 514, 515 ausbilden. Der innerste oder der dem Bildsensor 20 am nächsten liegende Rahmenstrukturabschnitt 511 der Rahmenstruktur 51 weist im Vergleich zu den übrigen Rahmenstrukturabschnitten 512, 513, 514, 515 die kleinste Öffnung für den bildgebenden Lichtstrahl L auf.

Die Rahmenstruktur 51 kann gemäß einer anderen Ausführungsform auch insgesamt monolithisch ausgebildet sein. Auch dann kann die in Fig. 3 veranschaulichte Rahmenstruktur 51 mit den Abschnitten 511-515 mit den in Richtung zum Objektivmount größer werdenden Öffnungen zweckmäßig sein. Die in Fig. 3 dargestellte Rahmenstruktur 51 mit den schichtartig angeordneten Abschnitten 511-515 mit den in Richtung zum Objektivmount größer werdenden Öffnungen bildet beispielsweise "Taschen" aus, in den Streulicht mehrfachen Reflexen an absorbierenden Oberflächen ausgesetzt wird. Generell gilt: Umso höher die Reflexanzahl eines Streulichtpfads, desto stärker dessen Dämpfung. Die effektive Reflektanz eines Pfades beträgt Rⁿ, wobei R die Reflektanz und n die Reflexanzahl ist. Die axialen Abstände zwischen den Abschnitten 511-515 können weiter so gewählt werden, dass die Anzahl der Reflexe maximiert wird, bevor Streulicht in das Optiksystem zurück bzw. auf die Sensoroberfläche 21 fällt.

Hier sei aber betont, dass die in Fig. 3 dargestellte Ausbildung von "Taschen" anhand der schichtartig angeordneten Abschnitten 511-515 mit den in Richtung zum Objektivmount größer werdenden Öffnungen nur eine beispielhafte Variante ist. Wie gesagt kann gemäß einer anderen Ausführungsform die Rahmenstruktur 51 auch nur einen einzigen Rahmenstrukturabschnitt 511 umfassen (s. Fig. 5), oder die etwaigen weiteren Rahmenstrukturabschnitte sind in anderer Weise als in Fig. 3 veranschaulicht angeordnet.

Die Streulichtblende 50 weist also eine Blendenöffnung 500 für den bildgebenden Lichtstrahl L auf, wobei die Blendenöffnung 500 durch einen der Anzahl Rahmenstrukturabschnitte, z.B. durch den dem Sensor 20 am nächsten liegenden Rahmenstrukturabschnitt 511, ausgebildet ist. Z.B. ist die Blendenöffnung 500 allein durch diesen Rahmenstrukturabschnitt 511 ausgebildet. Zudem kann dieser Rahmenstrukturabschnitt 511 monolithisch (einteilig/einstückig) ausgebildet ist. Gemäß einer anderen Ausführungsform ist der den geschlossenen Polygonzug ausbildenden Rahmenstrukturabschnitt 511 mehrteilig ausgebildet, wobei die mehrere Teile des Rahmenstrukturabschnitts 511 in ihrer Gemeinsamkeit die Blendenöffnung 500 ausbilden und in einer Richtung parallel zur optischen Achse A nicht zueinander versetzt sind. Die Blendenöffnung 500 ist somit beispielsweise nicht definiert durch mehrere Rahmenstrukturabschnitte und/oder mehrere Teile, die in einer Richtung parallel zur optischen Achse A zueinander versetzt wären.

Ein Umfangsverlauf 55 der durch den Rahmenstrukturabschnitt 511 ausgebildeten Blendenöffnung 500 ist ein geschlossener Polygonzug, der eine Mehrzahl senkrecht zur optischen Achse A verlaufende Polygonsegmente mit jeweils mindestens drei Kanten 551 beinhaltet.

Der geschlossene Polygonzug enthält z.B. mindestens 8 Kanten 551, z.B. 16 Kanten 551. Mindestens jede von der Hälfte aller Kante 551 des geschlossenen Polygonzugs hat z.B. eine Länge von einigen mm. Die jeweilige Kantenlänge ist z.B. in Abhängigkeit von dem axialen Abstand zum Sensor 20, dem gewünschten Polygongrad des Umfangsverlauf 55 und/oder der radialen Position der betreffenden Kante gewählt.

Die Polygonsegmente sind entlang einer Richtung parallel zur optischen Achse A nicht zueinander versetzt. Z.B. weist jede Kante 551, 553 des Polygonzugs dieselbe Dicke auf, die bspw. kleiner als 50 µm ist. Die Dicke des Rahmenstrukturabschnitts 511, der den geschlossenen Polygonzug ausbildet, kann also weniger als 50 µm betragen, sogar weniger als beispielsweise 25 µm.

Die Rahmenstruktur 51 weist gemäß einer Ausführungsform eine Dicke d auf, die geringer ist als 100 µm. Die Dicke d ist z.B. gleich der Summe der Dicken der Rahmenstrukturabschnitte 511-515. Gemäß einem Beispiel weist die Rahmenstruktur 51 eine Dicke d im Bereich von 50 µm bis 100 µm auf, und/oder die Dicke des Rahmenstrukturabschnitts 511, der den geschlossenen Polygonzug ausbildet, liegt im Bereich von 10 µm bis 25 µm.

Die Rahmenstruktur 51 weist an ihrem äußeren Umfangsverlauf Befestigungsmittel 52 auf, z.B. mit Gewinde versehene Aussparungen, in die Schrauben eingreifen, um Beispielsweise eine Befestigung am Objektivmount 30 oder anderer Stelle zwischen dem Objektivmount 30 und dem Sensor 20 herbeizuführen.

Wie schon ausgeführt ist der Rahmenstrukturabschnitt 511, der den geschlossenen Polygonzug ausbildet, gemäß einer Ausführungsform ein monolithischer Rahmenstrukturabschnitt 511.

Der geschlossene Polygonzug weist gemäß einer Ausführungsform keine Fasen, Radien oder gekrümmte Kantenübergänge auf, sondern ist allein durch die Kanten 551, 553 gebildet, die an Ecken 552 des Polygonzugs ineinander übergehen.

Bei der dargestellten Ausführungsform gemäß Fig. 3 beträgt die Mehrzahl Polygonsegmente zwei ("oben" ein erstes Polygonsegment und "unten" ein zweites Polygonsegment). Die zwei Polygonsemente sind gleichartig und einander gegenüberliegend ausgebildet und durch zwei einander gegenüberliegende Kanten 553 ("rechts" und "links") verbunden. Die zwei einander gegenüberliegenden Kanten 553 haben die gleiche Länge, welche größer ist als die Länge einer jeden Kanten 551 der beiden Polygonsemente. Dies ist ein Beispiel für, bei dem die Anzahl der Polygonsegmente gering ist, entsprechend einem system- und positionsspezifischen Kompromiss zwischen azimutaler Feldbegrenzung und Polygonsegmentanzahl. Gemäß einem anderen Beispiel, z.B. bei einem Einsatz der Streulichtblende 50 in einem System mit einer verkippten Optik oder in einem Off-Axis System, ggf. mit unsymmetrischen Freiformoptiken, würden die Kanten 553 nicht zwingend dieselbe Länge haben; vielmehr könnten dort auch solchen Abschnitte des Polygonzugs sinnvoll "polygonisiert" sein.

Allgemeiner gesprochen kann besagter Kompromiss z.B. dadurch getroffen werden, indem insgesamt N^{∗}M parallel zueinander verlaufende Kanten 551, 553 zur Ausbildung des geschlossenen Polygonzugs vorgesehen sind, wobei M zwei beträgt und N eine ganze Zahl größer oder gleich vier ist. Ferner können die jeweils zwei parallel zueinander verlaufenden Kanten 551, 553 gleich lang sind. Mit anderen Worten gibt es in dem Polygonzug zu jeder Kante eine gleich lange und parallel zu dieser verlaufende Kante.

Im Grundsatz jedoch kann der geschlossene Polygonzug beliebig spezifisch optimiert auf jeweilige Anwendung von dem Rahmenstrukturabschnitt 511 ausgebildet sein. Eine dahingehende Variante zeigt Fig. 5, wo z.B. keine zueinander parallelen Kanten 551 vorgesehen sind. Die Verkippung der Kanten kann vorteilhaft sein, beispielsweise um Reflexe an den Kanten gezielt in Lichtfallen oder andere stark absorbierende Bereiche zu leiten.

Die Rahmenstruktur 51 ist z.B. durch eines der folgenden Fertigungsverfahren gefertigt:
Drahterodieren;
Stahlschneiden, z.B. mittels Laser;
Ätzen;
Spritzguss, und/oder Fräsverfahren;
additive Verfahren, z.B. 3D-Druck.

Die Rahmenstruktur 51 besteht z.B. aus einem Blech; insbesondere kann der Rahmenstrukturabschnitt 511 ein Blech sein, das mit einer Aussparung versehen ist, die die Blendenöffnung 500 ausbildet.

Die geraden Linien der Kanten 511, 513 des geschlossenen Polygonzugs der Blendenöffnung 500 fokussieren gemäß einer Ausführungsform wenig bis kein Streulicht (weder direkt noch durch Mehrfachreflektionen mit weiteren Oberflächen des Systems) und mindern damit die Sichtbarkeit von Streulicht. Beugungseffekte durch Oberflächenstrukturen können darüber hinaus durch gezielt gewählte Fertigungs- und Beschichtungsverfahren geringgehalten werden.

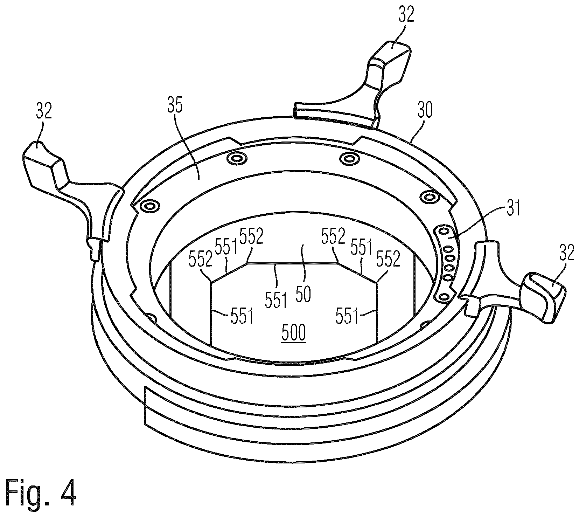

Schließlich zeigt Fig. 4 beispielhaft die Befestigung der Streulichtblende 50 an der Sensor 20 zugewandten Seite des Objektivmounts 30. Auf der der Umgebung zugewandten Seite des Objektivmounts 30 wird ein Objektiv befestigt. Z.B. ist dafür ein Bajonett-Verschluss 35 vorgesehen, der über Bedienelemente 32 arretiert bzw. gelöst werden kann. Ein Kommunikations- und Steuerungsinterface 35 schafft eine kommunikationstechnische Ankopplung an den Controller 93, so dass der Controller 93 steuerungstechnisch auf das am Objektivmount 30 befestigte Objektiv einwirken kann.

Wie hier verwendet, sind die Begriffe "habend", "enthaltend", "einschließend", "umfassend", "aufweisend" und ähnliches offene Begriffe, welche das Vorhandensein von angeführten Elementen oder Merkmalen anzeigen, zusätzliche Elemente oder Merkmale jedoch nicht ausschließen.

In Anbetracht des obigen Bereichs von Variationen und Anwendungen wird darauf hingewiesen, dass die vorliegende Erfindung nicht durch die vorangegangene Beschreibung eingeschränkt wird, und auch nicht durch die begleitenden Zeichnungen eingeschränkt wird. Die vorliegende Erfindung ist vielmehr lediglich durch die folgenden Ansprüche und deren legale Äquivalente eingeschränkt.

## Patentansprüche

1. Streulichtblende (50) für eine Kameraeinheit (10) eines Kamerasystems (100) zum Erfassen von Steh- und/oder Bewegtbildern eines Objekts, wobei die Kameraeinheit (10) einen Bildsensor (20) und ein Objektivmount (30) enthält, welche entlang einer optischen Achse (A) des Kamerasystems (100) angeordnet sind, und wobei das Objektivmount (30) mittels eines Objektivs einen bildgebenden Lichtstrahl (L) aus der das Objekt umfassenden Umgebung einer Sensoroberfläche (21) des Bildsensors (20) zuführt, und wobei die Streulichtblende (50) ausgebildet ist für eine Anordnung, bezogen auf die optische Achse (A), am Objektivmount (30) oder zwischen dem Objektivmount (30) und dem Bildsensor (20), und aufweist:
- eine Rahmenstruktur (51) mit einer Anzahl Rahmenstrukturabschnitte (511-515);
- eine Blendenöffnung (500) für den bildgebenden Lichtstrahl (L), wobei die Blendenöffnung (500) durch einen der Anzahl Rahmenstrukturabschnitte (511) ausgebildet ist; und wobei
- ein Umfangsverlauf (55) der durch den Rahmenstrukturabschnitt (511) ausgebildeten Blendenöffnung (500) ein geschlossener Polygonzug ist, der eine Mehrzahl senkrecht zur optischen Achse (A) verlaufende Polygonsegmente mit jeweils mindestens drei Kanten (551) beinhaltet.

2. Streulichtblende (50) nach Anspruch 1, wobei die Polygonsegmente entlang einer Richtung parallel zur optischen Achse (A) nicht zueinander versetzt sind.

3. Streulichtblende (50) nach Anspruch 1 oder 2, wobei der Rahmenstrukturabschnitt (511), der den geschlossenen Polygonzug ausbildet, ein monolithischer Rahmenstrukturabschnitt (511) ist.

4. Streulichtblende (50) nach einem der vorstehenden Ansprüche, wobei der geschlossene Polygonzug keine Fasen, Radien oder gekrümmte Kantenübergänge aufweist, sondern allein durch die Kanten (551) gebildet ist, die an Ecken (552) des Polygonzugs ineinander übergehen.

5. Streulichtblende (50) nach einem der vorstehenden Ansprüche, wobei die Mehrzahl Polygonsegmente zwei beträgt, und wobei die zwei Polygonsemente gleichartig und einander gegenüberliegend ausgebildet sind und durch zwei einander gegenüberliegende Kanten (553) verbunden sind.

6. Streulichtblende (50) nach Anspruch 5, wobei die zwei einander gegenüberliegenden Kanten (553) die gleiche Länge aufweisen, welche größer ist als die Länge einer jeden Kante (551) der beiden Polygonsemente.

7. Streulichtblende (50) nach einem der vorstehenden Ansprüche, wobei insgesamt N^{∗}M parallel zueinander verlaufende Kanten (551, 553) zur Ausbildung des geschlossenen Polygonzugs vorgesehen sind, und wobei M zwei beträgt und N eine ganze Zahl größer oder gleich vier ist.

8. Streulichtblende (50) nach Anspruch 7, wobei die jeweils zwei parallel zueinander verlaufenden Kanten (551, 553) gleich lang sind.

9. Streulichtblende (50) nach einem der vorstehenden Ansprüche, wobei die Rahmenstruktur (51) monolithisch ausgebildet ist.

10. Streulichtblende (50) nach einem der vorstehenden Ansprüche, wobei eine Dicke (d) der Rahmenstruktur (51) parallel zur optischen Achse (A) weniger als 100 µm beträgt.

11. Streulichtblende (50) nach einem der vorstehenden Ansprüche, wobei eine Dicke des Rahmenstrukturabschnitts (511), der den geschlossenen Polygonzug ausbildet, weniger als 50 µm beträgt.

12. Streulichtblende (50) nach einem der vorstehenden Ansprüche, wobei die Rahmenstruktur (51) durch eines der folgenden Fertigungsverfahren gefertigt ist:
- Drahterodieren;
- Stahlschneiden, z.B. mittels Laser;
- Ätzen;
- Spritzguss, und/oder Fräsverfahren;
- additive Verfahren, z.B. 3D-Druck.

13. Streulichtblende (50) nach einem der vorstehenden Ansprüche, wobei die Rahmenstruktur (51) aus einem Blech besteht.

14. Kamerasystem (100) zum Erfassen von Steh- und/oder Bewegtbildern eines Objekts, umfassend eine Kameraeinheit (10) mit einem Bildsensor (20) und einem Objektivmount (30), welche entlang einer optischen Achse (A) des Kamerasystems (100) angeordnet sind, und wobei das Objektivmount (30) mittels eines Objektivs einen bildgebenden Lichtstrahl (L) aus der das Objekt umfassenden Umgebung einer Sensoroberfläche (21) des Bildsensors (20) zuführt, und umfassend eine Streulichtblende (500), die ausgebildet ist für eine Anordnung, bezogen auf die optische Achse (A), am Objektivmount (30) oder zwischen dem Objektivmount (30) und dem Bildsensor (20), und die aufweist:
- eine Rahmenstruktur (51) mit einer Anzahl Rahmenstrukturabschnitte (511-515);
- eine Blendenöffnung (500) für den bildgebenden Lichtstrahl (L), wobei die Blendenöffnung (500) durch einen der Anzahl Rahmenstrukturabschnitte (511) ausgebildet ist; und wobei
- ein Umfangsverlauf (55) der durch den Rahmenstrukturabschnitt (511) ausgebildeten Blendenöffnung (500) ein geschlossener Polygonzug ist, der eine Mehrzahl senkrecht zur optischen Achse (A) verlaufende Polygonsegmente mit jeweils mindestens drei Kanten (551) beinhaltet.

15. Kamerasystem (100) nach Anspruch 14, wobei die Streulichtblende (50) zwischen dem Objektivmount (30) und dem Bildsensor (20) angeordnet ist.
